# EUROPÄISCHE PATENTSCHRIFT

(11) **EP 1 567 832 B1**
(45) Veröffentlichungstag und Bekanntmachung des Hinweises auf die Patenterteilung: **01.12.2010**
(21) Anmeldenummer: 03782254.1
(22) Anmeldetag: 29.11.2003
(51) Int. Cl.: G01D 5/347

(54) **OPTOELEKTRONISCHE MESSEINRICHTUNG ZUM ERFASSEN EINER RELATIVBEWEGUNG ZWISCHEN EINEM GEBER UND EINER SENSORZEILE SOWIE OPTOELEKTRONISCHE SENSORZEILE**
OPTOELECTRONIC MEASURING DEVICE FOR DETECTING A RELATIVE MOVEMENT BETWEEN AN ENCODER AND A SENSOR ARRAY, AND OPTOELECTRONIC SENSOR ARRAY
DISPOSITIF DE MESURE OPTOELECTRONIQUE DESTINE A DETECTER UN MOUVEMENT RELATIF ENTRE UN TRANSMETTEUR ET UNE LIGNE DE CAPTEURS, ET LIGNE DE CAPTEURS OPTOELECTRONIQUE

(30) Priorität: 03.12.2002 DE 10256333
(43) Veröffentlichungstag der Anmeldung: 31.08.2005
(73) Patentinhaber: Leopold Kostal GmbH & Co. KG, 58507 Lüdenscheid (DE)
(72) Erfinder: KOESTER, Michael, 44265 Dortmund (DE)
(86) Internationale Anmeldenummer: PCT/EP2003/013472
(87) Internationale Veröffentlichungsnummer: WO 2004/051195

(56) Entgegenhaltungen:
- EP-A- 1 010 967
- US-A- 4 633 224
- US-A- 5 965 879
- US-A1- 2002 134 926

## Beschreibung

Die Erfindung betrifft eine optoelektronische Messeinrichtung zum Erfassen einer Relativbewegung zwischen einem einen Absolutcode tragenden und von einer Lichtquelle beleuchteten Geber und einer Sensorzeile als optische Empfängeranordnung, mit einer Vielzahl in Reihe angeordneter Sensorelemente mit jeweils einer Photodiode als photoelektrischem Wandlerelement. Ferner betrifft die Erfindung eine optoelektronische Sensorzeile, mit einer Vielzahl in einer Reihe angeordneter Sensorelemente mit jeweils einer Photodiode als photoelektrischem Wandlerelement.

Derartige optoelektronische Messeinrichtungen werden beispielsweise als Lenkwinkelsensor zum Erfassen der Drehwinkelstellung des Lenkrades eines Kraftfahrzeuges eingesetzt. Benötigt wird der Lenkwinkel als Eingangsgröße zum Beaufschlagen eines Fahrdynamiksystems oder auch zum Betreiben eines elektrischen Lenksystems, etwa im Rahmen eines sogenannten "Steer-by-Wire"-Systems. Derartige optoelektronisch arbeitende Messeinrichtungen umfassen einen einen Absolutcode tragenden Geber, beispielsweise als Codescheibe ausgebildet. Der Absolutcode kann ein analoger oder auch ein digitaler Code sein, im letzteren Fall beispielsweise als Gray-Code ausgebildet. Die Codescheibe ist bei Einsatz einer solchen Messeinrichtung als Lenkwinkelsensor an die Drehbewegung der Lenkspindel bzw. des Lenkrades gekoppelt. Ortsfest gegenüber dem Geber ist eine Empfängeranordnung vorgesehen, die in aller Regel durch eine optoelektronische Sensorzeile gebildet wird. Eine solche, üblicherweise im Rahmen eines Lenkwinkelsensors eingesetzte Sensorzeile umfasst eine Vielzahl in einer Reihe nebeneinander angeordneter Sensor-elemente, die jeweils als photoelektrisches Wandlerelement eine Photodiode umfassen. Die Sensorelemente einer solchen Sensorzeile werden nacheinander ausgelesen. Zu diesem Zweck verfügen die Sensorelemente jeweils neben einer Photodiode auch über einen Integrator. Ferner ist jedes Sensorelement mit einem Schalter ausgestattet, damit dieses mit einem Ausgangsverstärker bei seinem Auslesen verbunden werden kann. Die Ansteuerung der einzelnen Schalter der Sensorelemente der Sensorzeile erfolgt durch ein digitales Schieberegister. Zum Auswerten der aus den einzelnen Sensorelementen des Zeilensensors ausgelesenen Belichtungsdaten wird ein Auswertealgorithmus eingesetzt. Die Auswertung erfolgt mittels eines Mikrocontrollers. Bei einer solchen optoelektronischen Messeinrichtung, die als Lenkwinkelsensor eingesetzt ist, kann eine Lenkwinkelbestimmung etwa alle 10 mSec vorgenommen werden. Dieses ergibt sich aus der zum Auslesen der Sensorzeile benötigten Zeit und insbesondere aus den im Rahmen einer Automotive-Anwendung zur Verfügung stehenden Rechenressourcen des Mikrocontrollers.

Auch wenn mit einer solchen vorbekannten Messeinrichtung der Lenkwinkel eines Kraftfahrzeuges im üblichen Rahmen hinreichend präzise erfasst werden kann, so sind diese vorbekannten Systeme dennoch verbesserungswürdig. Dies betrifft insbesondere Anforderungen hinsichtlich der notwendigen Sicherheitskonzepte, vor allem, wenn eine solche Einrichtung im Rahmen eines "Steer-by-Wire"-Konzeptes eingesetzt wird, bei dem eine mechanische Verbindung zwischen dem Lenkrad und den gelenkten Rädern grundsätzlich nicht vorhanden ist. Bei den vorbekannten Lenkwinkelsensoren ist es zum Erfassen der aktuellen Drehwinkelstellung des Lenkrades notwendig, dass der Lenkvorgang ausreichend langsam vorgenommen wird, damit Änderungen von dem Lenkwinkelsensor erkannt werden können. Auch wenn dies in aller Regel der Fall ist, gibt es Grenzsituationen, bei denen eine Bewegung des Lenkrades abrupt und mit hoher Geschwindigkeit erfolgt, so dass die vorgenommene Änderung der Drehwinkelstellung des Lenkrades systemseitig nicht oder zumindest nicht vollständig erfasst werden kann, insbesondere wenn sich die Einrichtung in einem Schlaf- oder Ruhemodus befindet. Folglich ist der dann bestimmte Lenkwinkel fehlerhaft.

Zum Erhöhen der System- und Informationssicherheit ist bekannt, ein solches System redundant auszustatten. Im Rahmen von Lenkwinkelsensoren kann dies beispielsweise dadurch erfolgen, dass zwei Sensorzeilen zum Abtasten des Gebers eingesetzt sind. Tatsächlich handelt es sich bei einem solchen System jedoch lediglich um eine redundante Empfängeranordnung, die denselben Geber abtastet. Daher handelt es sich bei einem solchen System nicht um ein solches, bei dem die gewünschte Winkelinformation insgesamt redundant und somit über zwei unterschiedliche Systeme erfasst wird. Ferner wäre es wünschenswert, die vorhandenen Systeme hinsichtlich ihrer Auflösung und/oder hinsichtlich des zwischen zwei Messungen liegenden Zeitraumes zeitlich höher auflösen zu können.

Die US-Patentanmeldung US 2002/0134926 A1 zeigt einen optoelektronischen Drehwinkelsensor mit einer eine mehrspurige digitale Codierung tragenden, an die Drehbewegung eines Rotors gekoppelten beleuchteten Codescheibe und einem aus einer Vielzahl einzelner Wandlerelemente bestehenden Sensorarray zum Abtasten der Codierung der Codescheibe.

Die US-Patentschriften 4,633,224 und 5,965,879 sowie die europäische Offenlegungsschrift EP 1 010 967 A2 offenbaren jeweils optoelektronische Messeinrichtungen zum Erfassen einer Relativbewegung zwischen einem einen Absolutcode sowie eine Inkrementalspur tragenden und von einer Lichtquelle beleuchteten Geber und einer optischen Empfängeranordnung.

Als optische Empfängeranordnungen zur Abtastung der Codeinformationen werden beim Gegenstand der US 4,633,224 jeweils diskrete Photoempfänger für jede Spur eingesetzt, bei der US 5,965,879 werden die Codemuster durch eine Mikroskopoptik auf eine herkömmliche CCD-Zeile abgebildet. Bei der in der EP 1 010 967 A2 offenbarten Einrichtung sind zwei Sensorzeilen als optische Empfängeranordnungen vorhanden, wobei eine erste Sensorzeile zur Abtastung der absoluten Codierung und eine zweite zur Abtastung der Inkrementalspur vorgesehen ist.

Ausgehend von diesem diskutierten Stand der Technik liegt der Erfindung daher die Aufgabe zugrunde, eine eingangs genannte gattungsgemäße optoelektronische Messeinrichtung, insbesondere ausgebildet als Lenkwinkelsensor, dergestalt weiterzubilden, dass in Abhängigkeit von den jeweilig gewünschten Zielen einzelne oder auch mehrere zum vorbekannten Stand der Technik aufgezeigten Nachteile vermieden werden können. Ferner liegt der Erfindung die Aufgabe zugrunde, eine optoelektronische Sensorzeile für eine solche Messeinrichtung vorzuschlagen.

Während die erstgenannte Aufgabe erfindungsgemäß dadurch gelöst wird, dass diejenigen Sensorelemente der Sensorzeile, auf denen der Absolutcode abgebildet wird, neben der Photodiode einen Integrator für den durch Belichten der jeweiligen Photodiode photoelektrisch erzeugten Strom umfassen, wobei diese Sensorelemente mittels eines ersten Auswertealgorithmus ausgewertet werden, und dass die Empfängeranordnung zumindest eine weitere Photodiode umfasst, die durch einen dem Geber zugeordneten Inkrementalcode belichtet wird, und dieser zumindest einen Photodiode ein direkter Abgriff zum Abgreifen der Belichtungsdaten und zum Auswerten dieser Belichtungsdaten mittels eines zweiten Auswertealgorithmus zugeordnet ist, wird die zweitgenannte Aufgabe erfindungsgemäß dadurch gelöst, dass die Sensorzeile eine erste Sensorelementgruppe, deren Sensorelemente neben der Photodiode einen Integrator für den durch Belichten der Photodiode photoelektrisch erzeugten Strom umfassen, und zumindest eine weitere Sensorelementgruppe mit zumindest einem Sensorelement aufweist, deren Sensorelemente einen direkten Abgriff zum Abgreifen der Belichtungsdaten der Photodiode umfassen.

Bei einer solchen elektronischen Messeinrichtung, deren zentrales Element zweckmäßigerweise die ebenfalls näher spezifizierte Sensorzeile ist, kann diese ohne weiteres entsprechend den gewünschten Anforderungen ausgebildet werden. Durch Vorsehen zumindest einer Photodiode mit einem direkten Abgriff zum Auslesen der Belichtungsdaten bzw. der Ladungswechsel können diese Daten anders und insbesondere grundsätzlich ohne die Notwendigkeit des Einsatzes eines Mikrocontrollers ausgewertet werden, verglichen mit denjenigen Sensorelementen, die zum Abtasten des Absolutcodes vorgesehen sind. Die vorgesehene Auswertung der Belichtungsdaten der Photodioden erstgenannter Sensorelemente wird im Rahmen dieser Ausführungen auch ohne Einsatz eines Mikrocontrollers unter dem Begriff Auswertealgorithmus subsummiert. Die Messeinrichtung umfasst somit eine Empfängeranordnung mit zumindest zwei Sensorelementgruppen, wobei die Belichtungsdaten der Sensorelemente der zumindest zwei Sensorelementgruppen unterschiedlich ausgelesen und ausgewertet werden. Der Geber dieser Messeinrichtung trägt zwei unterschiedliche Codierungen, wobei die eine Codierung zum Belichten der Sensorelemente der einen Sensorelementgruppe und die andere Codierung zum Belichten des zumindest einen Sensorelements der anderen Sensorelementgruppe dient. Dem Geber ist neben dem Absolutcode ein Inkrementalcode zugeordnet, der die zumindest eine weitere Photodiode belichtet. Dies kann je nach Ausstattung des Systems ausgenutzt werden, um die Auflösung des Absolutcodesystems zu erhöhen. Ferner kann der Inkrementalcode genutzt werden, um als eigenständiger Code neben dem Absolutcode ein weiteres Ergebnis bei der Bestimmung der relativen Position zwischen dem Geber und der Empfängeranordnung zu liefern. Bei einem Einsatz einer solchen Messeinrichtung im Rahmen einer Automotiveanwendung, beispielsweise als Lenkwinkelsensor, besteht die Möglichkeit, die zum Erfassen des Absolutcodes vorgesehenen Sensorelemente bei nicht betätigtem Kraftfahrzeug ebenso wie die nachgeschalteten Auswerteeinheiten in einen Schlaf- oder Ruhemodus zu schalten und lediglich die Inkrementalspur hinsichtlich eintretender Bewegungen abzutasten. Auf diese Weise können unter Einsatz eines nur minimalen Stromverbrauches Drehwinkeländerungen erfasst werden. Besonders reizvoll an einer solchen Messeinrichtung ist, dass die genannten Vorteile miteinander kombiniert werden können und dass zum Realisieren einer solchen Messeinrichtung der Hardwareeinsatz gegenüber vorbekannten Einrichtungen kaum geändert werden muss.

Besonders zweckmäßig ist zum Realisieren einer solchen optoelektronischen Messeinrichtung, wenn einzelne Sensorelemente der Sensorzeile einen direkten Abgriff zum Abgreifen der photoelektrischen Ladung ihrer Photodiode aufweisen. Diese Sensorelemente sind in Reihe nebeneinander angeordnet und befinden sich zweckmäßigerweise am Rand der Sensorzeile. Um über den Inkrementalcode auch eine Drehrichtungsbestimmung vornehmen zu können, ist es zweckmäßig, dem Geber zwei Inkrementalspuren zuzuordnen, die versetzt zueinander bezüglich ihrer Codierung angeordnet sind. Folglich umfasst die Empfängeranordnung ebenfalls zwei Sensorelementgruppen, von denen jedes Sensorelement einen direkten Abgriff zum Abgreifen der photoelektrischen Ladung der jeweiligen Photodiode aufweist.

In einer vorteilhaften Weiterbildung einer zum Einsatz in einer optoelektronischen Messeinrichtung dienenden Sensorzeile, die die beiden oben beschriebenen, unterschiedlichen Sensorelemente aufweist, ist vorgesehen, dass zur Erhöhung der Auswertegeschwindigkeit der über die Integratoren ausgelesenen Daten der einzelnen Sensorelemente der Sensorzeile eine serielle Schnittstelle zugeordnet ist. Die notwendige Signalaufbereitung erfolgt dann ebenfalls in dem Baustein der Sensorzeile, wobei dieser dann auch über eine Signalaufbereitung, etwa einen A/D-Wandler, eine Flankendetektionserkennung, einen Zähler und über einen Zwischenspeicher verfügt. Dies ist insbesondere im Rahmen von Automotive-Anwendungen günstig, um Prozessorressourcen zu schonen.

Nachfolgend ist die Erfindung anhand eines Ausführungsbeispiels unter Bezugnahme auf die beigefügten Figuren beschrieben. Es zeigen:

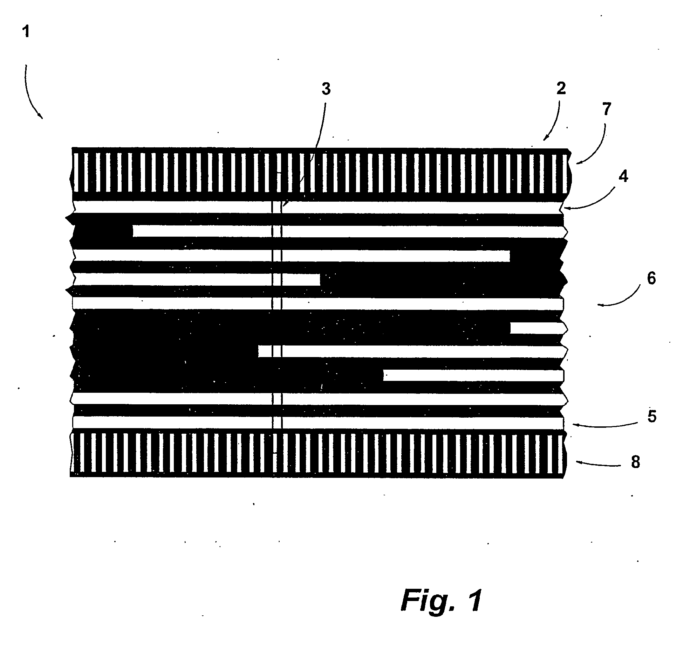

- **Fig. 1:**: eine schematisierte Darstellung einer optoelektronischen Messeinrichtung mit einem Geber und eine durch den Geber belichteten Sensorzeile und
- **Fig. 2:**: eine schematisierte Blockdarstellung der Sensorzeile der Figur 1.

Eine insgesamt mit dem Bezugszeichen 1 bezeichnete optoelektronische Messeinrichtung umfasst eine als Geber dienende Codescheibe 2, die beweglich gegenüber einer Sensorzeile 3 angeordnet ist. Die Codescheibe 2 ist bezüglich ihrer Bewegung an das bezüglich einer Bewegung zu erfassende Element, beispielsweise die Lenkspindel eines Kraftfahrzeuges gekoppelt. Die Codescheibe 2 ist von der der Sensorzeile 3 gegenüberliegenden Seite beleuchtet, so dass die auf der Codescheibe 2 befindlichen Strukturen auf der photosensitiven Oberfläche der Sensorzeile 3 abgebildet werden. Die Codescheibe 2 umfasst einen durch zwei Referenzspuren 4, 5 eingefassten Bereich, in dem eine Absolutcodierung 6 angeordnet ist. Die Referenzspuren 4, 5 dienen zur Korrektur von Lageveränderungen der Codescheibe 2 gegenüber der Sensorzeile 3. Jeweils außenseitig grenzt an eine Referenzspur 4, 5 ein weiterer Abschnitt der Codescheibe 2, der jeweils eine Inkrementalspur 7, 8 als Codierung trägt. Aufgrund des Toleranzausgleiches weisen die beiden Inkrementalspuren 7, 8 eine gewisse Breite auf. Für den Fall, dass ein Drehwinkel erfasst werden soll, ist es zweckmäßig, den Geber als runde Scheibe auszubilden, auf der die Codespuren konzentrisch zueinander angeordnet sind.

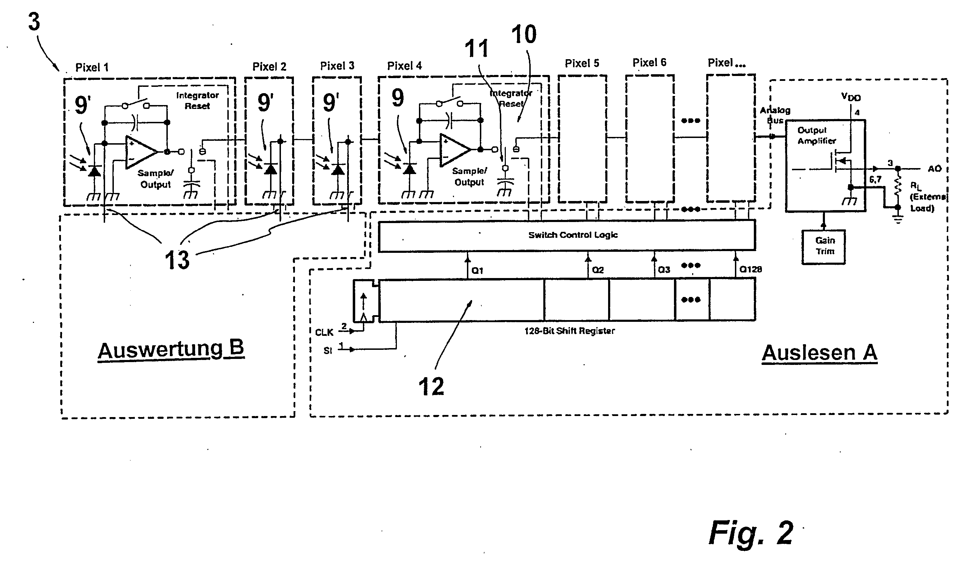

Die Sensorzeile 3 ist aus einer Vielzahl in Reihe benachbart nebeneinander angeordneter Sensorelemente (Pixel) aufgebaut (vgl. Figur 2). Bei der beschriebenen Messeinrichtung 1 ist vorgesehen, dass jede Spur zumindest drei Sensorelemente der Sensorzeile 3 belichtet. Die Sensorelemente, die zum Abtasten der Absolutcodierung 6 vorgesehen sind, umfassen neben einer Photodiode 9 einen Integrator 10. Die beim Belichten der Photodiode 9 über den Belichtungszeitraum generierte Ladung wird in einem Kondensator 11 so lange gespeichert bis durch ein digitales Schieberegister 12 die Spannung aus dem Kondensator 11 abgegriffen wird. Bei dem dargestellten Ausführungsbeispiel umfasst die Sensorzeile 128 Sensorelemente. Die drei äußeren Sensorelemente dienen zum Abtasten jeweils der Inkrementalspuren 7, 8. So dienen die verbleibenden 122 Sensorelemente zum Abtasten des Absolutcodes 6 sowie der beiden Referenzspuren 4, 5. Zur Vereinfachung der Darstellung sind in Figur 2 lediglich die drei Sensorelemente einer Sensorelementgruppe zum Abtasten einer Inkrementalspur 7 bzw. 8 an dem einen Ende der Sensorzeile dargestellt. Die jeweils ersten Sensorelemente (Pixel) sind schaltungstechnisch vollständig dargestellt; die sich daran anschließenden Sensorelemente sind jeweils entsprechend aufgebaut.

Die Sensorelemente zum Abtasten der Inkrementalspuren sind aus Herstellungsgründen ebenso aufgebaut wie die oben beschriebenen Sensorelemente zum Abtasten des Absolutcodes 6. Diese Sensorelemente verfügen jedoch über einen direkten Abgriff 13, über den die Belichtungsdaten der Photodioden 9' direkt ausgelesen und ausgewertet werden können. Die übrigen Bestandteile dieser Sensorelemente werden grundsätzlich nicht benötigt. Zumindest die Sensorelemente mit den Photodioden 9' verfügen zusätzlich über eine in Figur 2 nicht dargestellte Schalteinrichtung, mit der eine elektrische Verbindung zwischen der Photodiode 9' und dem Integrator getrennt ist, wenn diese Photodioden 9' - wie in dem dargestellten Ausführungsbeispiel vorgesehen - zum direkten Abgreifen der Belichtungsdaten der Photodioden 9' angeschlossen sind. Zweckmäßig ist die Ausgestaltung einer Sensorzeile, bei der sämtliche Sensorelemente in der beschriebenen Art und Weise ausgebildet sind und die unterschiedliche Nutzung der einzelnen Sensorelemente sich durch den jeweilig unterschiedlichen Anschluss einstellt.

Die Auswertung der erstbeschriebenen Gruppe der Sensorelemente erfolgt nach Auslesen der einzelnen Sensorelemente (Auslesen A) über einen ersten Auswertealgorithmus, zu dem eine Signalaufbereitung, und insbesondere eine Auswertung der Belichtungsdaten hinsichtlich ihrer Flankenübergänge erfolgt. Diese Auswertung erfolgt ebenso wie eine Bestimmung der absoluten Position der Codescheibe 2 gegenüber der Sensorzeile 3 in einem in den Figuren nicht dargestellten und außerhalb des Bausteins der Sensorzeile angeordneten Mikrocontroller.

Zum Auswerten der über die direkten Abgriffe 13 der Photodioden 9' abgegriffenen Belichtungsdaten wird ein Mikrocontroller nicht benötigt. Eine Auswertung dieser Belichtungsdaten erfolgt somit wesentlich rascher als ein Auswerten der Belichtungsdaten der Sensorelemente der anderen Sensorelementgruppe. Die Auswertung der Belichtungsdaten der Photodioden 9', die durch den Inkrementalcode 7 bzw. 8 generiert werden, erfolgt bei dem dargestellten Ausführungsbeispiel zur Erhöhung der Auflösung des Absolutcodes und insbesondere auch um Bewegungen der Codescheibe 2 in denjenigen Zeitintervallen zu erfassen, in denen eine Belichtung der übrigen Sensorelemente aufgrund noch andauernder Auswerteschritte nicht erfolgen kann, entsprechend einem weiteren Auswertealgorithmus (Auswertung B). Die Auswertung der Belichtungsdaten der Photodioden 9' ist lediglich zum Zählen der Flankenübergänge ausgelegt, wobei bei dem dargestellten Ausführungsbeispiel die Codierungen der beiden Inkrementalspuren 7, 8 versetzt zueinander angeordnet sind, um auf diese Weise eine Drehrichtungsbestimmung ausschließlich aufgrund der erfassten Inkrementalcodes bestimmen zu können. Durch diese unterschiedlichen Belichtungs- und Auswertealgorithmen und aufgrund des Vorsehens von zwei versetzt zueinander angeordneten Inkrementalspuren ist bei diesem Ausführungsbeispiel das System zudem redundant ausgebildet, da ein Zählen der Flankenübergänge sowohl in positiver als auch in negativer Richtung erfolgen kann und somit der Inkrementalcode ebenfalls zur Bestimmung der absoluten Position herangezogen werden kann. Auf diese Weise kann ein mit dem Absolutcode 6 erzieltes Ergebnis bezüglich seiner Schlüssigkeit durch das über die beiden Inkrementalcodespuren 7, 8 Erzielte überprüft werden. Die in dem dargestellten Ausführungsbeispiel vorgenommene Teilung der Inkrementalspur ist als Beispiel zu verstehen und angepasst auf die Bedürfnisse dieses Ausführungsbeispiels, das Auflösungsvermögen des Absolutgebers zu erhöhen.

Aus der Beschreibung der Erfindung wird deutlich, dass mit einfachen Mitteln und letztendlich lediglich mit Vorsehen eines direkten Abgriffes zum Abgreifen der Belichtungsdaten der Photodioden einzelner Sensorelemente einer Sensorzeile optoelektronische Messeinrichtungen realisierbar sind, die gegenüber Vorbekannten erhebliche Verbesserungen aufweisen.

### Bezugszeichenliste

- 1: optoelektronische Messeinrichtung
- 2: Codescheibe
- 3: Sensorzeile
- 4: Referenzspur
- 5: Referenzspur
- 6: Absolutcodierung
- 7: Inkrementalspur
- 8: Inkrementalspur
- 9, 9': Photodiode
- 10: Integrator
- 11: Kondensator
- 12: Schieberegister
- 13: direkter Abgriff

## Patentansprüche

1. Optoelektronische Messeinrichtung zum Erfassen einer Relativbewegung zwischen einem einen Absolutcode (6) tragenden und von einer Lichtquelle beleuchteten Geber (2) und einer Sensorzeile (3) als optische Empfängeranordnung, mit einer Vielzahl in Reihe angeordneter Sensorelemente mit jeweils einer Photodiode (9) als photoelektrischem Wandlerelement, **dadurch gekennzeichnet, dass** diejenigen Sensorelemente der Sensorzeile (3), auf denen der Absolutcode (6) abgebildet wird, neben der Photodiode (9) einen Integrator (10) für den durch Belichten der jeweiligen Photodiode (9) photoelektrisch erzeugten Strom umfassen, wobei diese Sensorelemente mittels eines ersten Auswertealgorithmus ausgewertet werden, und dass die Empfängeranordnung zumindest eine weitere Photodiode (9') umfasst, die durch einen dem Geber (2) zugeordneten Inkrementalcode (7, 8) belichtet wird, und dieser zumindest einen Photodiode (9') ein direkter Abgriff (13) zum Abgreifen der Belichtungsdaten und zum Auswerten dieser Belichtungsdaten mittels eines zweiten Auswertealgorithmus zugeordnet ist.

2. Messeinrichtung nach Anspruch 1, **dadurch gekennzeichnet, dass** die zumindest eine weitere Photodiode (9') Teil eines Sensorelements der Sensorzeile (3) ist.

3. Messeinrichtung nach Anspruch 1 oder 2, **dadurch gekennzeichnet, dass** die Empfängeranordnung mehrere in Reihe nebeneinander angeordnete weitere Photodioden (9') mit einem direkten Abgriff (13) aufweist.

4. Messeinrichtung nach Anspruch 3, **dadurch gekennzeichnet, dass** die Photodioden mit einem direkten Abgriff in zwei Photodiodengruppen gruppiert angeordnet sind, die durch jeweils eine Inkrementalcodespur des Gebers belichtet werden, wobei die beiden Inkrementalcodespuren versetzt zueinander angeordnet sind.

5. Messeinrichtung nach einem der Ansprüche 1 bis 4, **dadurch gekennzeichnet, dass** die Messeinrichtung ein Lenkwinkelsensor zum Erfassen der Drehwinkelstellung des Lenkrades eines Kraftfahrzeuges ist.

6. Optoelektronische Sensorzeile, mit einer Vielzahl in einer Reihe angeordneter Sensorelemente mit jeweils einer Photodiode (9) als photoelektrischem Wandlerelement für eine Messeinrichtung nach einem der Ansprüche 1 bis 6, **dadurch gekennzeichnet, dass** die Sensorzeile (3) eine erste Sensorelementgruppe, deren Sensorelemente neben der Photodiode (9) einen Integrator (10) für den durch Belichten der Photodiode (9) photoelektrisch erzeugten Strom umfassen, und zumindest eine weitere Sensorelementgruppe mit zumindest einem Sensorelement aufweist, deren Sensorelemente einen direkten Abgriff (13) zum Abgreifen der Belichtungsdaten der Photodiode (9') umfassen.

7. Sensorzeile nach Anspruch 6, **dadurch gekennzeichnet, dass** die Sensorzeile zwei Sensorelementgruppen aufweist, deren Sensorelemente jeweils einen direkten Abgriff zum Abgreifen der Belichtungsdaten der Photodioden aufweisen, und dass die erste Sensorelementgruppe zwischen den beiden weiteren Sensorelementgruppen angeordnet ist.

## Claims

1. Optoelectronic measuring facility for detecting a relative movement between an encoder (2) that bears an absolute code (6) and is illuminated by a light source, and a sensor row (3) as an optical receiver arrangement, with a plurality of sensor elements arranged in a row, each with a photo diode (9) as a photoelectrical transducer element, **characterised in that**, besides the photo diode (9), such sensor elements in the sensor row (3) on which the absolute code (6) is imaged incorporate an integrator (10) for the current that is photo-electrically generated by exposing the respective photo diode (9), these sensor elements being analysed by means of a first analysis algorithm, and that the receiver arrangement encompasses at least one further photo diode (9') which is exposed by means of an incremental code (7, 8) assigned to the encoder (2), and a direct pick-up (13) for tapping the exposure data and analysing this exposure data by means of a second analysis algorithm is assigned to the said at least one photo diode (9').

2. Measuring facility in accordance with Claim 1, **characterised in that** the at least one further photo diode (9') is part of a sensor element of the sensor row (3).

3. Measuring facility in accordance with Claim 1 or Claim 2, **characterised in that** the receiver arrangement features several further photo diodes (9') which have a direct pick-up (13) and are arranged in a row adjacent to each other.

4. Measuring facility in accordance with Claim 3, **characterised in that** the photo diodes with a direct pick-up are arranged assorted into two photo diode groups, each of which is exposed by an incremental code track of the encoder, for which purpose the two incremental code tracks are arranged offset to each other.

5. Measuring facility in accordance with any of Claims 1 to 4, **characterised in that** the measuring facility is a steering angle sensor for detecting the rotation angle position of the steering wheel of a motor vehicle.

6. Optoelectronic sensor row with a plurality of sensor elements arranged in a row, each with a photo diode (9) as a photoelectrical transducer element for a measuring facility in accordance with any of Claims 1 to 6, **characterised in that** the sensor row (3) features a first sensor element group the sensor elements of which, in addition to the photo diode (9), encompass an integrator (10) for the current that is photo-electrically generated by exposing the photo diode (9) and at least one further sensor element group with at least one sensor element whose sensor elements encompass a direct pick-up (13) for tapping the exposure data of the photo diode (9').

7. Sensor row in accordance with Claim 6, **characterised in that** the sensor row features two sensor element groups whose sensor elements each have a direct pick-up for tapping the exposure data of the photo diodes, and that the first sensor element group is arranged between the two other sensor element groups.

## Revendications

1. Système de mesure optoélectronique pour la détection d'un mouvement relatif entre un transmetteur (2), qui porte un code absolu (6) et est éclairé par une source de lumière, et une ligne de détecteurs (3), en tant que circuit récepteur optique, avec une pluralité d'éléments de détection, qui sont disposés en rangée, avec chacun une photodiode (9) en tant qu'élément de conversion photoélectrique, **caractérisé en ce que** les éléments de détection de la ligne de détecteurs (3), sur lesquels le code absolu (6) est représenté, comprennent, à côté de la photodiode (9), un intégrateur (10) pour le courant généré photoélectriquement par la photodiode (9) respective, ces éléments de détection étant évalués au moyen d'un algorithme d'évaluation, et **en ce que** le circuit de réception comprend au moins une autre photodiode (9'), qui est éclairée par un code incrémental (7, 8), qui est associé au transmetteur (2), et un échantillonneur direct (13) étant associé à cette photodiode (9'), au moins prévue, pour l'échantillonnage des données d'éclairage et pour l'évaluation de ces dites données d'éclairage au moyen d'un deuxième algorithme.

2. Système de mesure selon la revendication 1, **caractérisé en ce qu'**une autre photodiode (9'), au moins prévue fait partie d'un élément de détection de la ligne de détecteurs (3).

3. Système de mesure selon revendication 1 ou 2, **caractérisé en ce que** le circuit de réception présente plusieurs autres photodiodes (9'), alignées les unes à côté des autres, avec un échantillonneur direct (13).

4. Système de mesure selon la revendication 3, **caractérisé en ce que** les photodiodes sont groupées, avec un échantillonneur direct, en deux groupes de photodiodes, qui sont éclairés chacun par une piste de code incrémental du transmetteur, les deux pistes de code incrémental étant décalées l'une par rapport à l'autre.

5. Système de mesure selon l'une des revendications 1 à 4, **caractérisée en ce que** le système de mesure est un détecteur d'angle de braquage pour la détection de la position d'angle de rotation du volant d'un véhicule automobile.

6. Ligne de détecteurs optoélectronique avec une pluralité d'éléments de détection, disposés en une rangée, avec chacun un photodiode (9) en tant qu'élément de conversion photoélectrique pour un système de mesure selon l'une des revendications 1 à 6, **caractérisée en ce que** la ligne de détecteurs (3) comprend un premier groupe d'éléments de détection, dont les éléments de détection comprennent, à côté de la photodiode (9). Un intégrateur (10) pour le courant généré de manière photoélectrique par l'éclairage de la photodiode (9), et au moins un autre groupe d'éléments de détection, avec au moins un élément de détection, dont les éléments de détection comprennent un échantillonneur direct (13) pour échantillonner des données d'éclairage de la photodiode (9').

7. Ligne de détecteurs selon la revendication 6, **caractérisée en ce que** ladite ligne de détecteurs présente deux groupes d'éléments de détection, dont les éléments de détection présentent chacun un échantillonneur direct pour l'échantillonnage des données d'éclairage des photodiodes, et **en ce que** le premier groupe d'éléments de détection est disposé entre deux autres groupes d'éléments de détection.
